# EUROPEAN PATENT SPECIFICATION

(11) **EP 1 387 115 B1**
(45) Date of publication and mention of the grant of the patent: **12.12.2007**
(21) Application number: 02021651.1
(22) Date of filing: 27.09.2002
(51) Int. Cl.: F16K 27/04

(54) **Faucet having a delivery barrel arranged at the top of the faucet body**
Wasserhahn mit dem Auslass im Gehäuseoberteil
Robinet avec la sortie dans la partie supérieure du boîtier

(30) Priority: 01.08.2002 IT MI20020387 U
(43) Date of publication of application: 04.02.2004
(73) Proprietor: Soldi, Barbara, 28010 Alzo di Pella (Novara) (IT)
(72) Inventor: Soldi, Barbara, 28010 Alzo di Pella (Novara) (IT)
(74) Representative: Cicogna, Franco

(56) References cited:
- EP-A- 0 046 162
- EP-A- 0 375 475
- EP-A- 0 453 287
- WO-A-01/33121
- DE-A- 2 616 898
- FR-A- 2 278 028
- FR-A- 2 525 319

## Description

### BACKGROUND OF THE INVENTION

The present invention relates to a faucet having a water delivery barrel arranged at the top of the faucet body, as described in the preamble of Claim 1 and known from EP-A-0 046 162.

As is known, faucets having the water delivery barrel or tube extending from the top portion of the faucet body usually comprise a progressive-type of ceramics disc valve, which does not allow to adjust the mixing and simultaneous adjustment of the water flow-rate by the user.

Accordingly, in prior faucets of the above mentioned type, it is necessary either omit the flow rate adjustment capability, or provide an additional flow rate adjusting member, separated from the mixing valve.

Such a construction, in addition to being scarcely practical for the user, is very complex, since two different discrete elements are required therein.

### SUMMARY OF THE INVENTION

Accordingly, the aim of the present invention is to overcome the above mentioned drawbacks, by providing a faucet having a water delivery barrel arranged at the top of the faucet body, allowing to greatly simplify the faucet control, and providing a very simple construction.

Within the scope of the above mentioned aim, a main object of the present invention is to provide such a faucet the component elements of which are arranged in a greatly functional arrangement.

Yet another object of the present invention is to provide such a faucet which is very reliable and safe in operation.

Yet another object of the present invention is to provide such a faucet, having a water delivery barrel arranged at the top of the faucet body, which can be easily made and which, moreover, is very competitive from a mere economic standpoint.

According to one aspect of the present invention, the above mentioned aim and objects, as well as yet other objects, which will become more apparent hereinafter, are achieved by a faucet having the features of Claim 1.

### BRIEF DESCRIPTION OF THE DRAWINGS

Further characteristics and advantages of the present invention will become more apparent hereinafter from the following detailed disclosure of a preferred, though not exclusive, embodiment of a faucet having a water delivery barrel arranged at the top of the faucet body, and being illustrated, by way of an indicative, but not limitative, example, in the figures of the accompanying drawings, where:

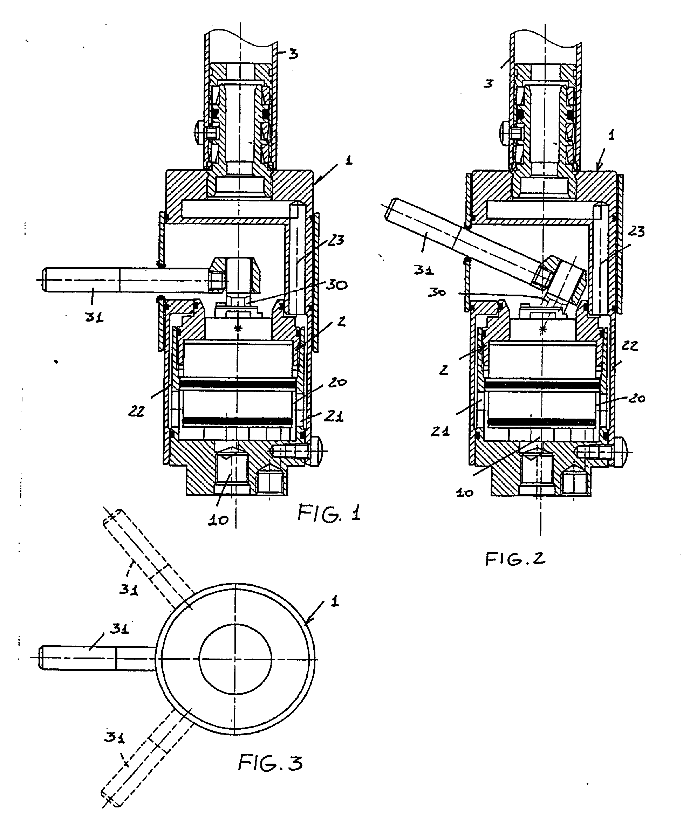

Figure 1 is a cross-sectional view illustrating the faucet according to the invention in a closing condition thereof;
Figure 2 is a further cross-sectional view illustrating the faucet according to the invention in an opening position thereof for delivering water;
Figure 3 is a top plan view of the faucet according to the present invention, in which the dashed lines represent the different operating positions which can be assumed by the mixing lever of the faucet;

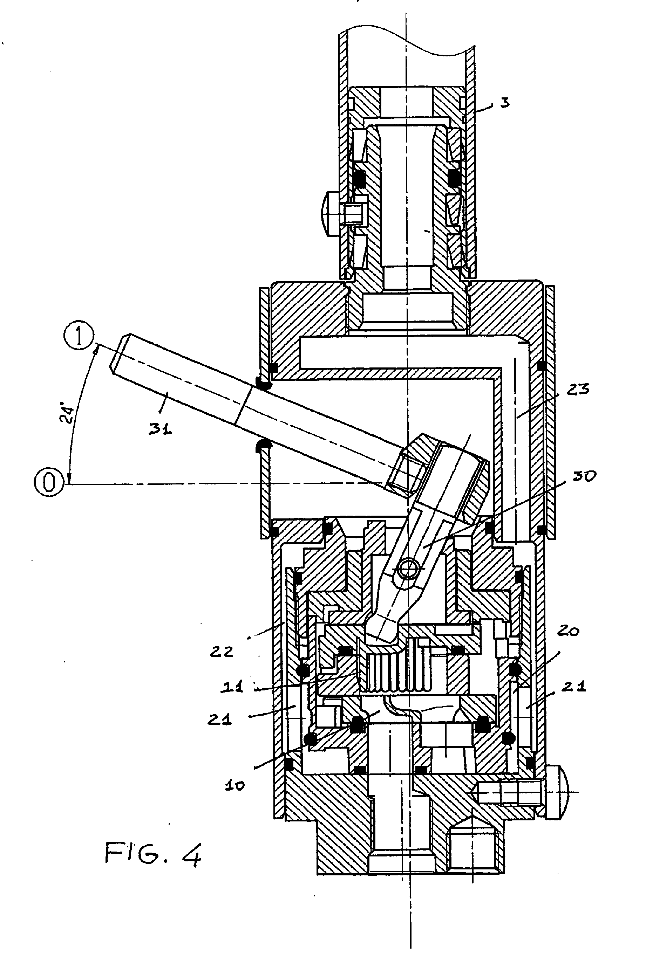

Figure 4 is a cross-sectional view illustrating the faucet and the cross-sectioned ceramics disc valve therefor; and

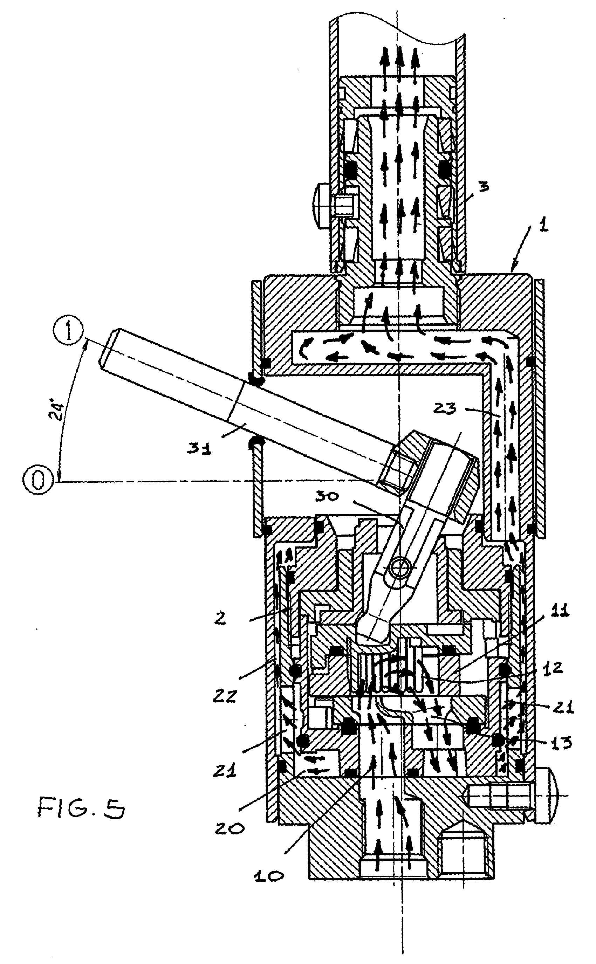

Figure 5 is a further cross-sectional view of the faucet, clearly showing the different flows therethrough.

### DESCRIPTION OF THE PREFERRED EMBODIMENT

With reference to the number references of the above mentioned figures, the faucet, having a water delivery barrel arranged at the top of the faucet body, comprises a faucet body, generally indicated by the reference number 1, inside of which is engaged a ceramics disc valve, which has been generally indicated by the reference number 2.

From the body of the faucet 1 extends, at the top thereof and axially aligned with the axis of the faucet body, a water delivery barrel or tube, generally indicated by the reference number 3.

A main feature of the present invention is that the valve 2 is a ceramics disc valve, designed for performing both the water mixing and flow rate adjusting, and being assembled axially aligned on the axis of the faucet body.

More specifically, the valve 2 comprises hot water and cold water inlets, generally indicated by the reference number 10, which lead to a movable ceramics disc 11, having a recess which can be arranged at a water outlet, said water being adjusted in its flow-rate and temperature.

The faucet cartridge or valve 5 is housed in a holding chamber 20, including outlet holes 21, circumferentially arranged, leading to a cylindric gap 22, which, at the top thereof, is coupled to a fitting duct 23, communicating with the water delivery barrel 3.

The cartridge or valve 2 comprises a control lever 30, which is axially articulated or pivoted with respect to the faucet body, and is coupled to a control lever 31, arranged under the water delivery outlet and being pivoted, for connection to the other control lever 30, on the axis of the faucet, thereby providing a novel construction which is not actually present in prior sanitary application faucets.

Another very important feature of the invention, is that the water delivery outlet is axially arranged at the top of the mixing valve, thereby providing a position which cannot be found in prior sanitary faucet constructions.

From the above disclosure it should be apparent that the invention fully achieves the intended aim and objects.

In particular, the fact must be pointed out that the invention provides a faucet having a water delivery barrel arranged at the top of the faucet body and control lever, in which it is possible to use a conventional ceramics disc mixing valve, allowing to both perform the proper water mixing, so as to adjust the water temperature, and to adjust the water flow-rate.

## Claims

1. A faucet having a water delivery barrel (3) arranged at the top of a faucet body (1), said faucet body defining an inner chamber (20), said water delivery barrel (3) having a longitudinal axis, said faucet body (1) housing a water mixing and delivery rate controlling ceramics disc valve (2), **characterized in that** said faucet body (1) and said ceramics disc valve (2) have a respective longitudinal axis coinciding with said longitudinal axis of said water delivery barrel (3), and that said valve comprises a first control lever (30) longitudinally axially articulated with respect to said faucet body (1) and a second swinging control lever (31) having an end thereof pivoted to an end portion of said first control lever (30) and the other end thereof outwardly projecting from said faucet body (1).

2. A faucet, according to claim 1, **characterized in that** said mixing valve is engaged in said chamber (20) of said faucet body, said chamber including a plurality of circumferential outlet holes (21).

3. A faucet, according to claim 2, **characterized in that** said cylindric gap (22) communicates, at a top thereof, with a fitting duct (23) communicating with said water delivery barrel (3).

4. A faucet, according to claim 1, **characterized in that** said second swinging control lever (31) is arranged under the water delivery outlet.

5. A faucet, according to one or more of the preceding claims, **characterized in that** said water delivery outlet is longitudinally axially arranged at the top of said mixing valve (2).

## Patentansprüche

1. Wasserhahn mit einem Wasserauslass (3) im Gehäuseoberteil (1), wobei das Gehäuse eine Innenkammer (20) definiert, wobei der Wasserauslass (3) eine Längsachse aufweist, wobei das Gehäuse (1) ein Keramikscheibenventil (2) zum Regeln des Wassermisch- und auslassverhältnisses einfasst, **dadurch gekennzeichnet, dass** das Gehäuse (1) und das Keramikscheibenventil (2) eine jeweilige Längsachse aufweisen, die mit der Längsachse des Wasserauslasses (3) zusammenfällt, und dass das Ventil einen ersten Stellhebel (30), der längs axial bezüglich des Gehäuses (1) angelenkt ist, und einen zweiten Schwenkstellhebel (31) umfasst, von dem ein Ende drehbar an einem Endabschnitt des ersten Stellhebels (30) angebracht ist und ein anderes Ende von dem Gehäuse (1) nach außen vorragt.

2. Wasserhahn nach Anspruch 1, **dadurch gekennzeichnet, dass** das Mischventil in der Kammer (20) des Gehäuses in Eingriff genommen ist, wobei zu der Kammer mehrere umfängliche Austrittslöcher (21) gehören.

3. Wasserhahn nach Anspruch 2, **dadurch gekennzeichnet, dass** der zylindrische Spalt (22) an einem Oberteil davon mit einer Passrohrleitung (23) in Verbindung steht, die mit dem Wasserauslass (3) in Verbindung steht.

4. Wasserhahn nach Anspruch 1, **dadurch gekennzeichnet, dass** der zweite Schwenkstellhebel (31) unter dem Wasserauslass angeordnet ist.

5. Wasserhahn nach einem oder mehreren der vorhergehenden Ansprüche, **dadurch gekennzeichnet, dass** der Wasserauslass längs axial am Oberteil des Mischventils (2) angeordnet ist.

## Revendications

1. Robinet ayant une colonne de distribution d'eau (3) agencée au niveau de la partie supérieure d'un corps de robinet (1), ledit corps de robinet définissant une chambre interne (20), ladite colonne de distribution d'eau (3) ayant un axe longitudinal, ledit corps de robinet (1) logeant une soupape à disque en céramique contrôlant la vitesse de distribution et le mélange d'eau (2), **caractérisé en ce que** ledit corps de robinet (1) et ladite soupape à disque en céramique (2) ont un axe longitudinal respectif qui coïncide avec ledit axe longitudinal de ladite colonne de distribution d'eau (3), et **en ce que** ladite soupape comporte un premier levier de commande (30) articulé de façon axiale et longitudinal par rapport audit corps de robinet (1) et un deuxième levier de commande oscillant (31) dont une extrémité pivote vers une partie d'extrémité dudit premier levier de commande (30) et dont l'autre extrémité fait saillie vers l'extérieur à partir dudit corps de robinet (1).

2. Robinet selon la revendication 1, **caractérisé en ce que** ladite soupape de mélange est engagée dans ladite chambre (20) dudit corps de robinet, ladite chambre comportant une pluralité d'orifices de sortie circonférentiels (21).

3. Robinet selon la revendication 2, **caractérisé en ce que** ledit interstice cylindrique (22) communique, au niveau de sa partie supérieure, avec une canalisation (23) qui communique avec ladite colonne de distribution d'eau (3).

4. Robinet selon la revendication 1, **caractérisé en ce que** le deuxième levier de commande oscillant (31) est agencé sous la sortie de distribution d'eau.

5. Robinet selon l'une quelconque des revendications précédentes, **caractérisé en ce que** ladite sortie de distribution d'eau est agencée de manière longitudinale et axiale au niveau de la partie supérieure de ladite soupape de mélange (2).
